# EUROPEAN PATENT SPECIFICATION

(11) **EP 1 959 788 B1**
(45) Date of publication and mention of the grant of the patent: **25.06.2014**
(21) Application number: 06847676.1
(22) Date of filing: 15.12.2006
(51) Int. Cl.: A45D 29/00, A45D 29/02

(54) **ANIMAL NAIL CLIPPER**
NAGELSCHNEIDER FÜR TIERE
COUPE-GRIFFE

(30) Priority: 16.12.2005 US 751054 P
(43) Date of publication of application: 27.08.2008
(73) Proprietor: STIM, LLC, Chesterfield, MO 63005 (US)
(72) Inventor: Manheimer, Ben III, Chesterfield, MO 63005 (US); Weeks, Vaughan, Racine, WI 53404 (US); Webb, Ruth, Racine, WI53404 (US)
(74) Representative: Asquith, Julian Peter
(86) International application number: PCT/US2006/047971
(87) International publication number: WO 2007/075450

(56) References cited:
- WO-A1-2005/084423
- US-A- 5 619 128
- US-A1- 2004 034 283
- US-A1- 2005 132 975
- US-A1- 2005 132 975
- US-A1- 2005 210 679

## Description

### BACKGROUND OF THE INVENTION

This invention relates generally to grooming equipment for animals such as pets and more particularly to a nail clipper that confirms the location of the nail's quick to prevent cutting it during nail trimming. This invention also senses the internal structure of the nail prior to clipping and allows accurate positioning of the blade just outside of the quick of the nail for a bleed-free nail clipping.

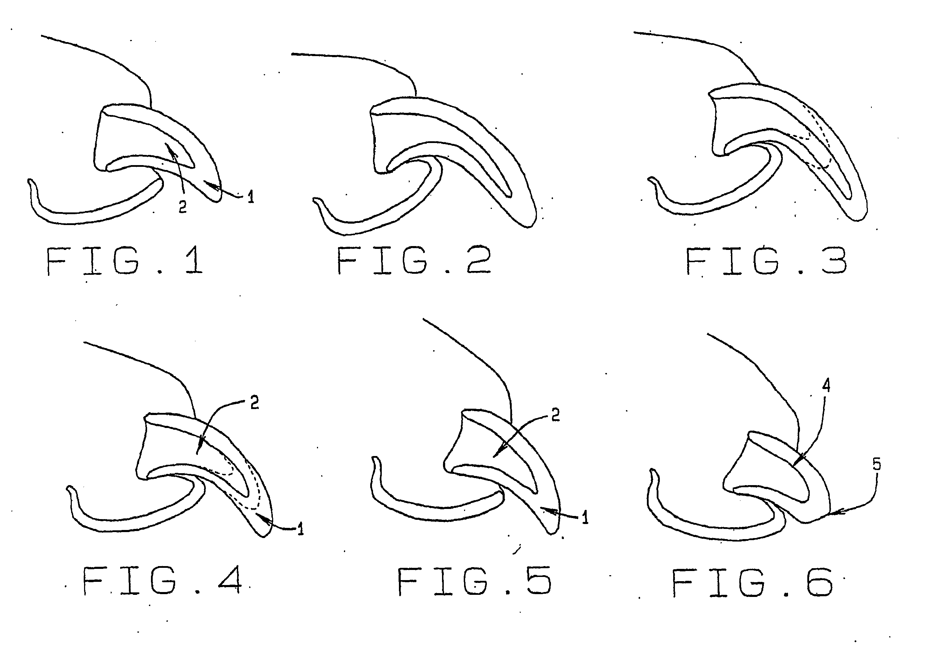

Animal nails, such as those cats, dogs, other mammals, and birds, contain a blood supply, called the quick, and nerves that can bleed excessively and induce severe sensations of pain if they are accidentally cut during nail trimming. As later shown, Figs. 1-6 illustrate the anatomy of an animal nail, showing the quick, its relationship to the remainder of the nail, and effective cutting of both.

Various types of nail clippers exist that provide precise hand-controlled trimming of the nails and other instruments provide nail filing, either by hand or power means. Experienced, successful users of nail clippers keep a styptic pencil nearby to stop nail bleeding if it occurs. However, the typical pet owner has tried trimming her pet's nails one time too many and caused pain, bleeding and trauma by cutting through the quick. Most animals, pets, dislike having their nails clipped. Inadvertent cutting into the quick of the nail can injure the animal causing both pain and bleeding, more than likely in pets with dark colored nails. Once this happens, pet owners have grave difficulty in attempting nail grooming again. Generally, most pet owners avoid cutting their pets' nails by deferring that task to a grooming service or their veterinarian. However, those services can be expensive and require transporting the pet to and from the service location.

### DESCRIPTION OF THE PRIOR ART

Various animal nail clippers have been shown in the prior art such as U.S. Pat. No. 2,955,354, issued to Laing, and U.S. Pat. No. 3,838,507 issued to Clark, and U.S. Pat. No. 4, 228, 585, issued to Nelson. One of the deficiencies in prior art clippers is no provision for localizing the quick of the nail prior to clipping the nail thus avoiding the aforementioned injury. The present invention overcomes this deficiency by providing a mechanically actuated nail clipper for an animal, or pet, which allows the user to sense the position of the quick prior to clipping the nail then to clip the nail safely at the desired length.

Further, the U.S. Pat. No. 3,845,553 to Fields showed a claw clipper with a reciprocating cutter. The clipper has a gauge 56 to establish how much nail to remove. The reciprocating cutter, 30, then is rapidly advance to clip the nail using a motorized screw. The cutter includes a spring to return the cutter to a recoiled position for the motorized screw to advance the cutter again, reciprocally. Alas, this patent does not detect the presence of the quick with any sensor.

US Patent Application Publication No. 2006/0042559 shows a clipper for pet claws with a lever operated cutter. The clipper receives a nail on the side and the nail proceeds between the two blades of the cutter. The cutter has a fixed blade and a rotating blade. Grasping the lever rotates the rotating blade to clip the nail. The application discloses a battery powered motor in the larger handle for grinding a clipped nail. The present invention though has a cutter that receives a nail from the bottom and a cutter with two blades. The blades of the present invention slide along a common line while abutting each other. The present invention lacks a motor or other grinding feature but does have the sensing means and quick indicator which differentiates the present invention from the Kang publication.

The U.S. Pat. No. 7,000,321 to Rodgers discloses an optical source and corresponding sensor for detecting the quick of an animal's nail. This patented device has a mechanical clipper with a sliding blade coupled with an optical source and sensor. The source and sensor are mounted proximate the clipper so an accurate reading of light passing through a nail is ascertained by the sensor prior to usage of the clipper. The present invention though has sensing through electrical charge or capacitance or resistance, a thermocouple, piezo-electric, heat, ultrasound, x-ray radiation, and infrared radiation. Once the quick is detected using the sensor, the present invention activates a quick indicator, preferably LED of single or multiple colors, to avoid startling an animal, to guide the user in operating the present invention.

US Patent Application Publication No. 2005/0132975, shows a hand powered nail and claw clipper. The clipper has a mechanical two blade guillotine type cutter where one blade is advanced along the other blade when the handle is closed. The clipper also has a sensor located in the fixed blade opposite the advancing other blade. The sensor is preferably a high intensity light with a cooperating detector or alternatively an ultrasound detector, a pulse oximeter, a laser, and an infra red thermometer. The present invention shares some features with this allowed application. However, the present invention has at least one LED to inform the operator visually, using single or multiple colors, about proximity to the quick and a detector capable of initializing itself. The detector establishes, or uses a pre-established, baseline on a non-quick substance, such as air, and uses that baseline to later determine the location of the cutting blade relative to the quick. An operator need not look at the position of the cutting blade on a nail but rather at the LED.

WO 2005/084423 describes claw clippers provided with an illumination device which is intended to allow a user to see the position of blood vessels before cutting animal nails.

The present invention overcomes the limitations of the prior art where the animal nail clipper provides a sensing means coupled to a visual output to guide an operator in positioning the clipper upon an animal's nail for cutting without injuring the quick. The prior art cutters do not provide for guiding the cutter away from the quick but rather provide mere detection of the quick.

### SUMMARY OF THE INVENTION

A device for cutting nails of an animal such as a dog, cat, or the like has a first handle, a second handle connected to the first handle, and pivotably moveable relative thereto, a cutting blade connected to the first handle and moveable and connectable to the second handle, a blade guide connected to the first handle, the blade being mounted to slide upon the blade guide. The device also has a sensing means attached to either the first handle, the second handle, the blades, or any combination of these parts.

The essence of this invention is to provide a quick sensing and locating, claw clipper for trimming animal claws and nails. The purpose of the invention is to provide a means and method for locating the quick of the claw, choosing the appropriate point for trimming said claw, and performing the trimming operation.

This is accomplished by means of an electrical sensor, which is attached to a mechanical device for clipping the nail. The sensor is a single plate of a capacitor, which returns a different frequency response when positioned near air, nail, or nail overlaying quick. Thus, the internal structures of the nail, in particular the blood or living tissue of the quick, or the blood flow, can be localized in order to verify that the cut will be made in a safe place. Alternative sensors not within the scope of the claims for detecting and localizing blood flow include electrical resistance, Doppler ultrasound, commonly used for blood flow detection in humans, or laser imaging.

The invention comprises a clipper means and a sensor means. The clipper means is any of the variety of shearing or grinding processes accomplished within a hand-held device appropriate for selectively removing portions of the animal claws. The sensor means consists in transmitter/receiver sensors in which a sensible signal is transmitted though the claw and received on the other side of the claw by an appropriate means, wherein capacitance change, attributable to the presence of the quick in the transmission path which differentiates transmission through claw and quick, is used to identify and localize the quick, thus guiding later trimming of the clay without injury to the quick.

In the preferred embodiment, the clipper means Is a hand-held and hand-powered shearing device similar to existing claw clippers. The sensor means is of the transmitter/receiver category using capacitance change caused by the presence of dielectric and conductive materials in the nail. The sensor means is mechanically joined to the clipper means such that a constant and known geometry is maintained between the sensor means and the location where the cut will occur when the clipper means is actuated.

The method of using the preferred embodiment of the invention proceeds as follows: the user switches the sensor circuit on. The user then positions the clipper means near the claw and receives an indication in the form.of a pattern of colored lights that indicates the structure adjacent to the sensor means. The user then moves the clipper sensor assembly in a proximal direction along the nail until the light pattern indicates that the sensor detects the presence of quick in the cutting zone. The user then moves the clipper sensor assembly distally along the nail until the light pattern indicates the sensor detects only nail. Using the light pattern, the user adjusts the position of the clipper means to the desired trimming location while avoiding the quick. The clipper means is then activated and the cut is made.

According to the invention the sensor means is a conductive plate, which forms a single plate of a capacitor. Earth ground effectively provides the opposing plate and forms a complete capacitor. The capacitance of the capacitor is affected by the electrical characteristics of material interposed between the single plate and the earth ground. The capacitor is included in a circuit such that changes in the instantaneous capacitance of the capacitor cause a change in the oscillatory frequency of the circuit. The oscillatory frequency is interpreted by a digital processor whose programming differentiates between frequencies arising from interposing air, nail, or nail with underlying quick. The programming causes an appropriate pattern of light emitting diodes (LEDs) to switch on or off communicating the type of material being sensed to the user.

In the preferred embodiment three LEDs are used: green, yellow and red. If the red LED is lit, it indicates that quick is present near the sensor and by inference the clipping means is positioned so that it would cut through quick. If the green LED is lit, it indicates that only nail material is present near the sensor and the clipper means may safely cut. If the yellow LED is lit, the clipping means is in the transition zone between the quick and the nail, thus the user should adjust the position of the clipper. In an alternate embodiment, other light patterns can be used to communicate to the user, including an alphanumeric display, a bar type display, and a liquid crystal display among other things.

Other light patterns, such as no LEDs lit or all LEDs, blinking indicate operational situations, such as low battery power or no material other than air in the vicinity of the sensor.

Other possible variations upon the concept and method of this particular invention may include: 1) the clipper means is powered by batteries or external power electromechanically coupled to the shearing blades, 2) the sensor means is powered externally, 3) the sensor means utilizes conductive portions of the clipper means as a capacitor plate, 4) the sensor is separate from the clipping means and is used independently to localize safe cutting areas, 5) the clipper means uses a burr or grinder to remove claw material, 6) the sensor means is electrically conductive and the clipper means is a grinder that automatically progresses forward along the claw until changes in conductivity indicate that the grinding is close to the quick, and 7) the clipper means uses a simple processor that automatically selects and positions the clipper means for optimum trimming of the claw.

In one embodiment the blades or cutters mounted to the blades are electrically isolated from each other and form the contact points for the sensing means. The sensing means imposes a voltage potential between the blades. Upon contact with the nail material the electrical potential produces a current flow through the nail material. The current flow is then detected and interpreted as either current, voltage drop, or resistance by existing electrical measurement means. The measurement means is then sensibly displayed as visual output by LED or audible output by beeper, tweeter, or horn.

In another embodiment, at least one of the blades is comprised of metallurgical dissimilar materials forming a thermocouple. The thermocouple becomes a sensing means. Upon contact with the nail material the thermocouple produces an electrical current as a function of the temperature of the underlying nail. The current flow is then detected and interpreted as either current, voltage drop, or resistance by existing electrical measurement means. The measurement means is then sensibly displayed as visual output by LED or audible output by beeper or horn.

In another embodiment, the first blade is in mechanical contact with a first piezo-electric device and the second blade is in mechanical contact with a second piezo-electric device, and the first and second piezo-electric devices are mutually sonically isolated. Upon contact with nail material the first piezo-electric device is actuated by an electrical input signal producing a mechanical vibration. The mechanical vibration is communicated through the first blade through the nail material and through the second blade to the second peizo-electric device. The second peizo-electric device responds to the mechanical vibration by producing an electrical output signal which is then communicated to an interpretation circuit. The time interval between the initiation of the electrical input signal and the electrical output signal can be interpreted as the speed of sound through all of the material. Attenuation between the electrical input signal and the electrical output signal can be interpreted as the sonic damping of the nail material. The interpretation of one or both of the speed of sound and the attenuation comprise a measurement means. The measurement means is then sensibly displayed as visual output by LED or audible output by beeper or horn.

In another embodiment the first blade is in thermal contact with a heating means and the second blade is in mechanical contact with a thermocouple device, the first and second blades being mutually thermally isolated. Upon contact with nail material the heating means is actuated by an electrical input signal producing a heat. The heat is communicated through the first blade through the nail material and through the second blade to the thermocouple device. The thermocouple device responds to the heat by producing an electrical output signal. The electrical output signal is then communicated to an interpretation circuit. The time interval between the initiation of the electrical input signal and the electrical output signal can be interpreted as the thermal conductivity of the nail material. The interpretation of the thermal conductivity comprises a measurement means. The measurement means is then sensibly displayed as visual output by LED or audible output by beeper or horn.

In another embodiment the first handle serves as the mounting point for a visible or invisible radiation source. The second handle serves as the mounting point for a radiation detector appropriate to receive radiation from the radiation source and return an electrical signal in response to the radiation. Upon contact with nail material the radiation source is actuated by an electrical input signal. The radiation is communicated through the nail material and is received by the radiation detector. The radiation detector responds to the radiation by producing an electrical output signal. The electrical output signal is then communicated to an interpretation circuit. The attenuation of the electrical output signal when compared with open air attenuation can be interpreted as the opacity of the nail material. The interpretation of the opacity comprises a measurement means. The measurement means is then sensibly displayed as visual output by LED or audible output by beeper or horn. In all of the preceding embodiments the sensing means is considered to be predictably located with respect to the clipping plane of the blades, thereby allowing the user to use the output, visibly or audibly, as a cue to correctly position the clipping plane.

In another embodiment the first handle serves as the mounting point for a visible light source. The light source having sufficient luminosity to allow visualization of the interior structure of the nail material and avoidance of the quick. A sensitive light detecting receiver may be incorporated to allow detection of extremely low levels of transmitted light. An extremely fast electronic gate may also be used to select only those first few photons which reach the receiver as these photons went through a nail on the straightest path.

It is the principal object of this current invention to provide an animal nail trimming device which is capable of indicating the location of the nail quick, and therefore the blood supply and nerves in the nail.

It is an object of this invention to provide an improved nail clipper for an animal, such as a dog or cat, that provides safety while clipping the animal's nails to prevent injury or harm to the animal.

It is an object of this invention to provide an improved nail clipper having a price acceptable to the consuming public where the nail clipper has a capacitor sensor powered by batteries or direct current.

It is an object of this invention to provide an improved nail clipper having a compact capacitor plate sensor and related circuitry that may be added to existing nail cutting devices.

It is a still further object of this invention to provide an improved nail clipper to provide a completely disposable unit is also feasible.

In accordance with these and other objects, which will be apparent hereinafter, the instant invention will now be described with particular reference to the accompanying drawings.

Other variations and modifications to the subject matter of this invention may be considered to those skilled in the art upon review of the invention as described herein. The ideas presented are not intended to limit the scope or application of the device, or its method of usage. Other objects, purposes, methods of usage, and variations may be considered by those skilled in the art.

### BRIEF DESCRIPTION OF THE DRAWINGS

In referring to the drawings,
FIG. 1 shows a schematic view of a nail upon the paw of a pet, such as a dog or cat;
FIG. 2 shows the exposed nail being gauged for cutting;
FIG. 3 shows the nail, over a period of time, clipped to retract the blood supply;
FIG. 4 indicates how the nail gets shorter through repeat cuttings and the blood flow recedes;
FIG. 5 indicates how the trimming of the nail with repeated short cuttings can prevent bleeding;
FIG. 6 shows a properly trimmed pet nail;
FIG. 7 shows the nail in the process of clipping by a trimmer, incorporating a sensor means, for the combination to disclose the internal blood supply in the nail, and the location where a trim can be made;
FIG. 8 is a perspective view showing the present invention;
FIG. 9 is a side view showing the present invention;
FIG. 10 shows an opposite side view in cross-section of a fragmentary portion of the present invention prior to movement of the cutting blade;
FIG. 11 shows the same view as FIG. 10 with the blade positioned in the cutting position;
FIG. 12 shows the circuit diagram for the circuit used to detect the presence of a sensitive area of the nail;
FIG. 13 is a block diagram of the circuitry for the sensor means;
FIG. 14 is a block diagram of the sensor means circuitry when sampling and Fig. 14a is a further block diagram of the sensor means circuitry;
FIG. 15 is another block diagram of the timing for sampling for the sensor circuitry; and,
FIG. 16 is another block diagram of the sampling where the LEDs are activated to communicate position near the quick to the user.

### DESCRIPTION OF THE PREFERRED EMBODIMENT

Referring to the drawings, and in particular Figures 1-6, a pet nail, projecting from the paw of the animal, shows what is considered, the dead segment of a nail at 1, but yet having an internal portion of the blood supply at 2, the quick, inherently provided therein. The concept of this invention, and the use of a clipper with a sensor, is to provide for a trained trimming of the nail, at the very tip, initially in FIG. 2, until such time as the blood supply within the nail gradually recedes, as a result of short trimmings, until such time as the blood supply has withdrawn significantly towards the paw as can be seen in FIG. 6, at 4, so that a substantial portion of the nail may be trimmed, as at 5, subsequently. As the figures indicate, in FIG. 1, the blood supply, generally identified as "quick" 2, is shown in a short nail 1. As the nail grows, as seen in FIG. 2, the blood supply gets somewhat longer as the nail grows. At this stage, if a cut is made at the tip of the blood supply, bleeding will occur, and the nail will still remain too long as in Fig. 2. If one trims at a greater distance, the blood supply is not encountered, but it will naturally begin to recede, and get shorter, as explained. As noted in FIG. 3, if the user clips or files a little off the long nail periodically, the blood supply will continue to recede within the nail, and be contracted towards the paw. As noted in FIG. 4, as the nail eventually gets shorter, through repeated trimmings, the blood supply also recedes, as can be noted. In FIG. 5, only when the nail is kept short, can it be trimmed without bleeding. If the same cut had been made on the long nail as shown in FIG. 2, it would have caused bleeding and pain to the animal. But, with proper sequential trimming daily, over a period of time, such as for a few days or a week or two, the blood supply continues to recede, only the dead portion of the nail is trimmed, and trimming for the animal is not a painful experience, when the blood supply has receded and is not encountered in trimming.

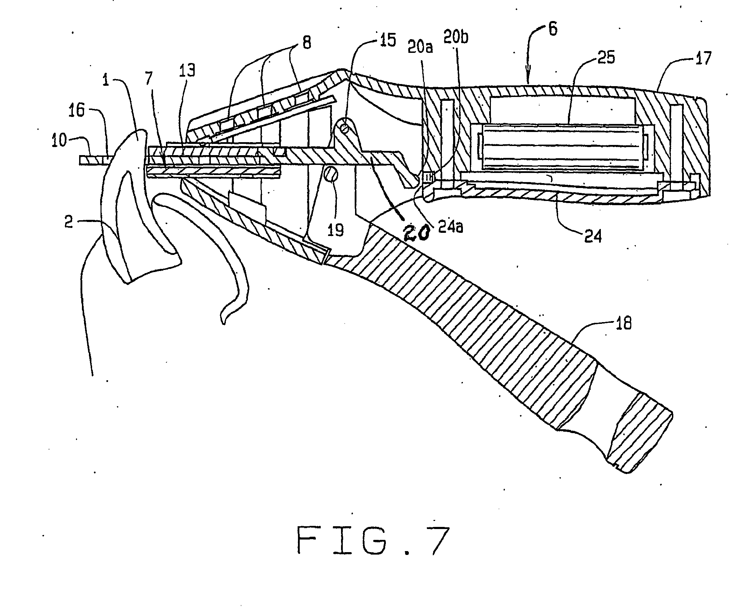

As can be seen in FIG. 7, the paw with nail 1 is disclosed. A trimmer, as at 6, is provided. Structured into the trimmer, is a circuit board 7, the forward most edge of which is rendered conductive by metallic coating or a metallic plate. The forward most edge electrically becomes a single plate of a capacitor and functionally becomes a sensor means at 7. The electrical circuit through the capacitor is completed when a contact, as at 20a, brushes against a switch 20b located within the handle 17. When the linkage arm 20 brushes against the switch, a circuit closes to operate the sensor for a brief interval before the cutting of the animal nail located within the apertures.

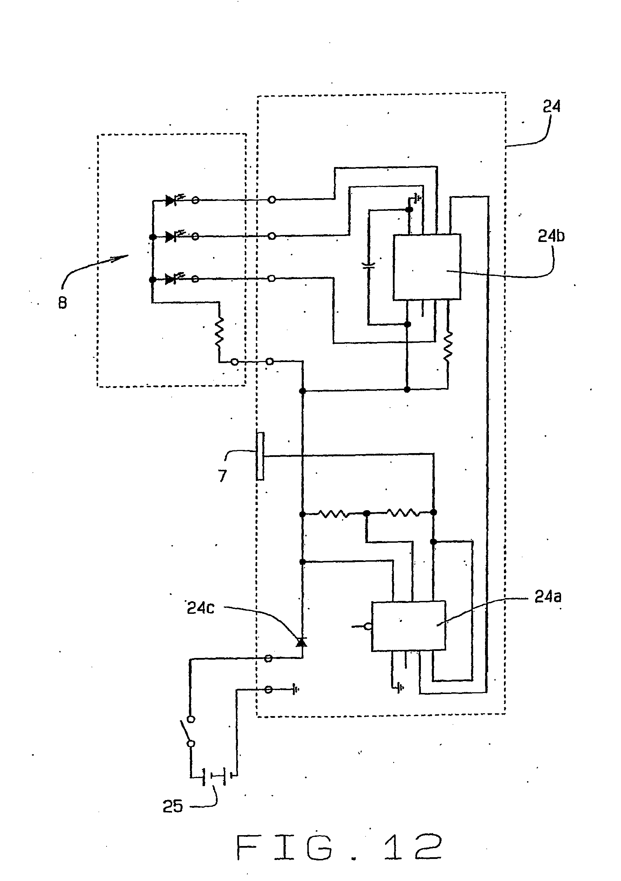

In the preferred embodiment the sensor means is a conductive plate, which forms a single plate of a capacitor. Earth ground, through the clipper user, or the pet, effectively provides the opposing plate and forms a complete capacitor. The capacitance of the capacitor is affected by the electrical characteristics of material interposed between the single plate and the earth ground. The capacitor is included in a circuit such that changes in the instantaneous capacitance of the capacitor cause a change in the oscillatory frequency of the circuit, as at 24a (see FIG. 12). The oscillatory frequency is interpreted by a digital processor, as at 24b (see FIG. 12), whose programming differentiates between frequencies arising from interposing air, nail or nail with underlying quick. The programming causes, a quick indicator, preferably an appropriate pattern of light emitting diodes (LEDs), to switch on or off thus communicating the type of material being sensed to the user.

In the preferred embodiment, three LEDs are used, as at 8: green, yellow and red. If the red LED is lit, it indicates that quick is present near the sensor and by inference the clipping means is positioned such that it would cut through the quick. If the green LED is lit, it indicates that only nail material is present near the sensor and the clipper means and thus it is safe to cut. If the yellow LED is lit, between the red and the green LEDs, the clipper means is located between the quick and the nail. Other light patterns, such as no LEDs lit or all LEDs blinking, indicate operational situations such as low battery power or no material other than air in the vicinity of said sensor to the user. In an alternate embodiment, the quick indicator is sensible by the user of the cutter with the sound or vibration generated by a motor, beeper, tweeter, or horn located within the handle 17.

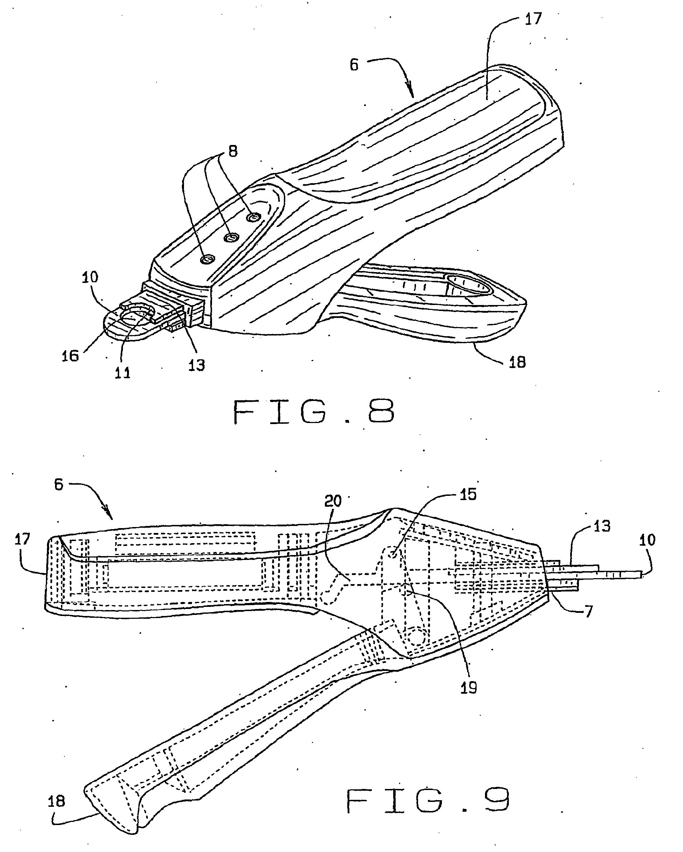

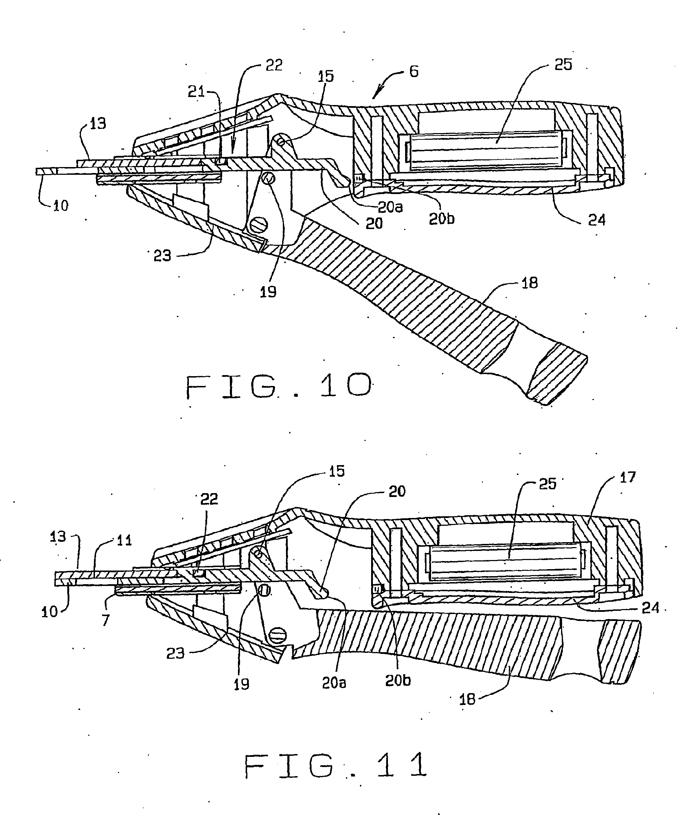

The electric charge for the circuitry and the electrical component is provided through the battery 25. The circuitry is protected from a reversed battery polarity installation by a diode, as at 24c (see FIG. 12). Handles 17,18 when squeezed together cause the blade 13 to move in a forward direction passing over (see FIG. 11) aperture 16 which receives the animal nail to be clipped. The animal nail is positioned also through aperture 11 which is in the mounting arm, or moving blade 13 and through one selected and pre-positioned aperture 16 disposed in the fixed blade 10. The handles 17 and 18, as shown in FIG. 8, are pivotally connected by a pin 19 as then shown In Fig. 9. Handle 18 is connected to blade 13 by linkage arm 20 and pin 15 in Fig. 10. Fig. 10 shows the present invention without electrical power supplied from the battery to the sensor circuit as the contact 20a is separated from the switch 20b. The spring 23 biases the handle 18 by a flange and linkage arm which provides for the spring tension against the action of the handle. The linkage arm 20 is connected to the blade 13 by pin 22 which is received in slot 21 in the blade 13. The blade 10 is affixed by screws to handle 17. In use, the initial forward motion of the handle 17 by the user retracts the linkage arm 20 that closes the switch 20b which delivers power to the sensor circuitry in the preferred embodiment. After recognizing the output from the sensor, the user closes the handle 18 in a grip upon the handle 17 to advance the blade 13 and cut the nail. In an alternate embodiment, the linkage arm 20 closes a switch, as at 20b, located proximate to the forward end of the battery compartment.

FIG. 12 shows the circuit diagram for the circuit 24 used to detect the presence of a sensitive area of the nail. The detection circuit prevents too close of a cut when trimming an animal's nails. Furthermore, it includes a series of LEDs, as at 8, which are sequentially lit, to provide an indication as to when a nail is being cut too closely. Alternatively, the LEDs can be replaced with an audible or sensible signal generator.

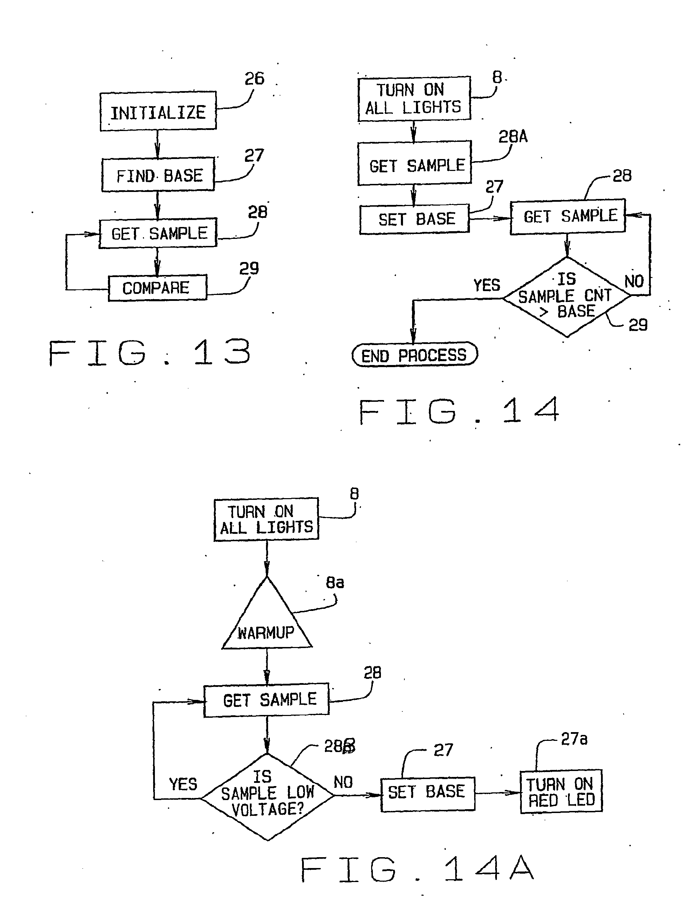

Fig. 13 describes a block diagram of the master subroutines of the software program upon a microprocessor, 24b, (FIG. 12) for operating the sensor portion of the clipper. The block diagram of the high level flow includes four steps. First, the user turns on the clipper which initializes 26 the clipper and provides power to a processor, microprocessor, or microchip. The microprocessor has at least one counting routine and at least one looping routing. The counting routine is set to zero and the looping routine is set to a certain number upon initialization. Second, the program determines the baseline 27 number later used in a compare routine 29. Third, the sensing means takes samples 28 of the frequency provided by the capacitor circuit and sets the count. Fourth, the count is compared as at 29 to the baseline number and the sensing means activates the appropriate affirmative, warning, or stopping output, generally an LED or other sensible indicator, for viewing, or sensing, by the user. The program loops through the third and fourth steps as it continually samples the location of the clipper relative to the quick and also adjusts the LED.

Then, Fig. 14 shows the logic for establishing the baseline 27 that the clipper uses for detecting the quick of the nail. Here in the second subroutine, the processor turns on the LEDs 8 and the software and sensing means takes a sample of the count given by air, as at 28A, that is not in the presence of a nail or the quick, and sets a baseline 27 number. The software then places the sensing means into a loop where the logic looks for a count greater, as at 29, than the baseline to check that the sensing means was not zeroed on the nail or the quick. When a higher count is found, the establishment of the baseline is completed and the second subroutine stops.

The sampling routine is further explained in Fig. 14a where as before the LEDs are initialized as at 8 and allowed to warm-up for a certain time, as at 8a. The software and sensing means takes a sample of the count given by air, as at 28, that is not in the presence of a nail or the quick. The sample is then checked for its voltage level, as at 28B. Samples that have a low voltage are released and another sample is taken and the voltage is measured again. When a sample is above the low voltage, the processor sets the baseline 27 number and illuminates the red LED.

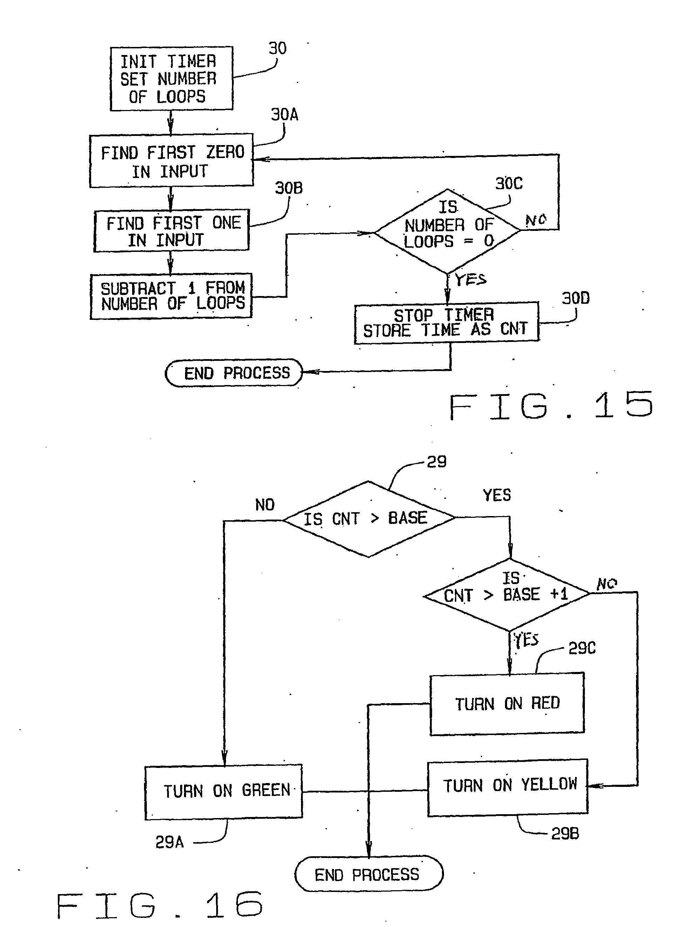

Fig. 15 shows the software moving from the baseline into the third subroutine for sampling. The software includes a timer circuit 30 that guides the sample routine. To begin sampling, the software sets the timer to zero and then starts the timer. The sensing means then detects a discharge of the capacitor 7 in the preferred embodiment by seeking the first "0", or zero as at 30a, from the circuit and then the first "1 ", or one, as at 30b. The detection process repeats for a predetermined number of frequency oscillations 30c in the capacitor. Upon reaching the predetermined number, the timer is stopped as at 30d and the count becomes the elapsed time.

Lastly, Fig. 16 describes the logic in the software for illuminating the LEDs. In this fourth subroutine, the software compares 29 the count detected in the third subroutine to the baseline 27 found by the second subroutine. For counts less than the baseline as at 29a, the software illuminates an affirmative output or green LED. If the count is the same as the baseline at 29b, the software intermittently illuminates a warning output or yellow LED. And if the count exceeds the baseline, the software illuminates the stopping output or red LED as at 29c. The LEDs are positioned upon the clipper so that they may be readily seen by the user as previously shown in Fig. 8.

Additionally, whenever power to the microchip or processor stops or is interrupted, the microchip resets itself. Upon restoration of power, the processing restarts from the beginning, including initializing and finding the baseline as previously described in Fig. 13.

The present invention has been shown and described herein in what is considered to be the most practical and preferred embodiment. It is recognized, however, that departures may be made there from within the scope of the invention and that obvious modifications will occur to a person skilled in the art.

Variations or modifications to the subject matter of this invention may occur to those skilled in the art of upon review of the development as explained herein. Such variations, if within the spirit of this development, are intended to be encompassing within the scope of any invention described herein. The description of the preferred embodiment, in addition to the illustration of this invention of the drawing, is done so for illustrative purposes only.

From the aforementioned description, an animal nail clipper has been described. The animal nail clipper is uniquely capable of readily indicating the proximity of a clipper to the quick in an animal's nail. The animal nail clipper and its various components may be manufactured from many materials including but not limited to steel, aluminum, polymers, high density polyethylene HDPE, polypropylene PP, polyethylene terephalate ethylene PETE, polyvinyl chloride PVC, nylon, ferrous and non-ferrous metals, their alloys and composites.

## Claims

1. A device for safely cutting a nail (1) of an animal to a desired length, while reducing the possibility of injury to said animal by cutting into a quick (2) of said nail (1), comprising:
at least one cutting blade (13);
mounting means for mounting said cutting blade (13),
mechanical actuating means for reciprocally moving said cutting blade (13) from a first position to a second position; and
a processor (24b),
**characterised in that** said mounting means is provided with a conductive plate (7), and **in that**:
said conductive plate (7) is a first plate of a capacitor and the animal or a user provides an earth ground which acts as a second plate thereof; wherein the nail (1) of the animal is receivable between said first plate and said earth ground when positioned for cutting by said cutting blade (13) and the capacitance of said capacitor changes based on electrical characteristics of the nail (1) of the animal; and
said processor (24b) is programmed to differentiate between changes in capacitance arising from air, the nail (1), and the nail (1) with underlying quick (2) disposed between said first plate and said earth ground and to provide a quick indicator based thereon before actuation of said cutting blade (13).

2. The safe animal nail cutter of claim 1 further comprising:
a fixed blade having an aperture for receiving the nail of the animal, said fixed blade being placed upon said cutting blade;
said mounting means having a hollow handle, said handle accommodating said cutting blade, said fixed blade and said actuating means;
said actuating means linking to said cutting blade, and having a moveable handle pivotally connecting with said hollow handle thus allowing the user to close said moveable handle upon said hollow handle thus advancing said cutting blade upon said fixed blade to cut a nail of an animal placed within said aperture.

3. The safe animal nail cutter of claim 1 further comprising:
an electrical supply, within the device, electrically coupled to said conductive plate.

4. The safe animal nail cutter of claim 1, wherein said quick indicator includes a visual display for warning the user to the presence of the quick of said nail.

5. The safe animal nail cutter of claim 1 wherein:
said processor initializes, determines a baseline capacitance, obtains a sample from said conductive plate, compares said sample to said baseline capacitance, and upon certain results of the comparison activates said quick indicator.

6. The safe animal nail cutter of claim 1, which further includes three light emitting diodes, said diodes being in electrical communication through said circuitry with the microprocessor, the program of the microprocessor through detection from the capacitor indicating through the illumination of a first LED that quick is present near the sensor and that the cutting blade is positioned such that it would cut through the quick of the animal nail, through the illumination of a second LED that only nail material is present near the sensor, and that it is safe to make a nail cut, and through the illumination of a third LED that the cutting blade is located between the quick and the nail and that the cutting blade is approximating the location where a cut may be made.

7. The safe animal nail cutter of claim 6, wherein said three light emitting diodes are of different colours.

8. A method for safely cutting a nail (1) of an animal to a desired length, while reducing the possibility of injury to said animal from cutting into a quick (2) of said nail (1), said method comprising providing a device comprising:
at least one cutting blade (13) mounted within at least one handle for mechanically actuated reciprocal movement of said blade (13) from a first position to a second position, and
a processor (24b),
**characterised by** providing said device with a conductive plate (7) positioned proximate said cutting blade (13),
wherein said conductive plate (7) is a first plate of a capacitor and the animal or a user provides an earth ground which acts as a second plate thereof; wherein the nail (1) of the animal is receivable between said first plate and said earth ground when positioned for cutting by said cutting blade (13) and the capacitance of said capacitor changes based on electrical characteristics of the nail (1) of the animal,
and wherein said processor (24b) is programmed to differentiate between changes in capacitance arising from air, the nail (1), and the nail (1) with underlying quick (2) disposed between said first plate and said earth ground;
and further **characterised by**:
a) initializing said processor (24b) and said conductive plate upon application of power thereto;
b) establishing a baseline of capacitance for said capacitor;
c) collecting a sample from said capacitor when located proximate said nail;
d) comparing said sample with said baseline for analysis; and,
e) providing a quick indicator to the user of said device, based upon said analysis, before actuation of said cutting blade (13).

9. The method of safe animal nail cutting of claim 8 further comprising:
said initializing including:
activating said quick indicator, and
checking said sample for voltage.

10. The method of safe animal nail cutting of claim 8 further comprising:
said comparing including:
analyzing whether said sample exceeds said baseline and upon exceeding said baseline, activating said quick indicator.

11. The method of safe animal nail cutting of claim 10 further comprising:
said comparing including a timer, said timer controlling iterations of said collecting said samples and said comparing of said samples to said baseline, said timer having a certain number of iterations, said timer reducing said iterations with each reading from said sensor, said timer ceasing when said iterations go to zero, and said timer providing a result to said computer for activating said quick indicator.

12. The method of safe animal nail cutting of claim 10 further comprising:
said providing a quick indicator including an affirmative output when said analysis is below said baseline, a warning output when said analysis equals said baseline and when said analysis is slightly above said baseline, and a stopping output when said analysis exceeds said baseline.

13. The method of safe animal nail cutting of claim 12 wherein:
said affirmative output is a green LED, said warning output is a yellow LED, and said stopping output is a red LED.

14. The method of safe animal nail cutting of claim 10 wherein:
said providing a quick indicator includes an audible signal.

15. The method of safe animal nail cutting of claim 10 wherein:
said providing a quick indicator includes a vibratory signal.

## Patentansprüche

1. Vorrichtung zum sicheren Schneiden eines Nagels (1) eines Tieres auf eine erwünschte Länge, wobei die Möglichkeit einer Verletzung des Tieres durch Schneiden in ein Nagelbett (2) des Nagels (1) verringert wird, umfassend:
mindestens eine Schneidklinge (13);
ein Anbringmittel zum Anbringen der Schneidklinge (13);
ein mechanisches Betätigungsmittel zum wechselseitigen Bewegen der Schneidklinge (13) von einer ersten Position zu einer zweiten Position; und
einen Prozessor (24b),
**dadurch gekennzeichnet, dass** das Anbringmittel mit einer leitfähigen Platte (7) versehen ist, und dadurch, dass:
die leitfähige Platte (7) eine erste Platte eines Kondensators ist und das Tier oder ein Benutzer eine Erdung bereitstellt, die als eine zweite Platte desselben wirkt; worin der Nagel (1) des Tieres zwischen der ersten Platte und der Erdung aufnehmbar ist, wenn er zum Schneiden mittels der Schneidklinge (13) positioniert wird, und die Kapazität des Kondensators sich auf der Grundlage charakteristischer elektrischer Merkmale des Nagels (1) des Tieres ändert; und
der Prozessor (24b) dafür programmiert ist, zwischen Änderungen der Kapazität zu unterscheiden, die davon herrühren, dass Luft, der Nagel (1) oder der Nagel (1) mit darunterliegendem Nagelbett (2) zwischen der ersten Platte und der Erdung angeordnet werden, und vor Betätigung der Schneidklinge (13) einen darauf beruhenden Nagelbettindikator bereitzustellen.

2. Sicherer Tiernagelschneider nach Anspruch 1, ferner umfassend:
eine feststehende Klinge mit einer Öffnung zum Aufnehmen des Nagels des Tieres, wobei die feststehende Klinge über der Schneidklinge platziert ist;
wobei das Anbringmittel einen hohlen Griff hat, wobei der Handgriff die Schneidklinge, die feststehende Klinge und das Betätigungsmittel aufnimmt;
wobei das Betätigungsmittel mit der Schneidklinge verbunden ist und einen beweglichen Griff hat, der mit dem hohlen Griff gelenkig verbunden ist, wodurch dem Benutzer ermöglicht wird, den beweglichen Griff über dem hohlen Griff zu schließen, wodurch die Schneidklinge auf die feststehende Klinge vorgeschoben wird, um einen in der Öffnung platzierten Nagel eines Tieres zu schneiden.

3. Sicherer Tiernagelschneider nach Anspruch 1, ferner umfassend:
eine Stromversorgung innerhalb der Vorrichtung, die mit der leitfähigen Platte elektrisch gekoppelt ist.

4. Sicherer Tiernagelschneider nach Anspruch 1, worin der Nagelbettindikator eine Sichtanzeige zum Hinweisen des Benutzers auf das Vorliegen des Nagelbetts des Nagels hinzuweisen.

5. Sicherer Tiernagelschneider nach Anspruch 1, worin:
der Prozessor sich initialisiert, eine Basislinienkapazität bestimmt, einen Abtastwert von der leitfähigen Platte erlangt, den Abtastwert mit der Basislinienkapazität vergleicht und bei bestimmten Ergebnissen des Vergleichs den Nagelbettindikator aktiviert.

6. Sicherer Tiernagelschneider nach Anspruch 1, der ferner drei Leuchtdioden aufweist, wobei die Dioden über die Schaltung in elektrischer Kommunikation mit dem Mikroprozessor stehen, wobei das Programm des Mikroprozessors durch Ermittlung vom Kondensator Folgendes anzeigt: durch das Leuchten einer ersten LED, dass in der Nähe des Sensors Nagelbett vorliegt und dass die Schneidklinge so positioniert ist, dass sie durch das Nagelbett des Tiernagels schneiden würde, durch das Leuchten einer zweiten LED, dass in der Nähe des Sensors nur Nagelmaterial vorliegt und dass es sicher ist, einen Nagelschnitt vorzunehmen, und durch das Leuchten einer dritten LED, dass die Schneidklinge sich zwischen dem Nagelbett und dem Nagel befindet und dass die Schneidklinge sich dem Ort nähert, wo ein Schnitt vorgenommen werden kann.

7. Sicherer Tiernagelschneider nach Anspruch 6, worin die drei Leuchtdioden von unterschiedlicher Farbe sind.

8. Verfahren zum sicheren Schneiden eines Nagels (1) eines Tieres auf eine erwünschte Länge, wobei die Möglichkeit einer Verletzung des Tieres durch Schneiden in ein Nagelbett (2) des Nagels (1) verringert wird, wobei das Verfahren das Bereitstellen einer Vorrichtung umfasst, welche umfasst:
mindestens eine Schneidklinge (13), die in mindestens einem Griff für eine mechanisch betätigte wechselseitige Bewegung der Schneidklinge (13) von einer ersten Position zu einer zweiten Position; und
einen Prozessor (24b),
**gekennzeichnet durch** Versehen der Vorrichtung mit einer leitfähigen Platte (7), die in unmittelbarer Nähe der Schneidklinge (13) positioniert ist,
worin die leitfähige Platte (7) eine erste Platte eines Kondensators ist und das Tier oder ein Benutzer eine Erdung bereitstellt, die als eine zweite Platte desselben wirkt; worin der Nagel (1) des Tieres zwischen der ersten Platte und der Erdung aufnehmbar ist, wenn er zum Schneiden mittels der Schneidklinge (13) positioniert wird, und die Kapazität des Kondensators sich auf der Grundlage charakteristischer elektrischer Merkmale des Nagels (1) des Tieres ändert,
und worin der Prozessor (24b) dafür programmiert ist, zwischen Änderungen der Kapazität zu unterscheiden, die davon herrühren, dass Luft, der Nagel (1) oder der Nagel (1) mit darunterliegendem Nagelbett (2) zwischen der ersten Platte und der Erdung angeordnet werden;
und ferner **gekennzeichnet durch**:
a) Initialisieren des Prozessors (24b) und der leitfähigen Platte **durch** Anlegen von Strom daran;
b) Feststellen einer Basislinie der Kapazität für den Kondensator;
c) Aufnehmen eines Abtastwerts von dem Kondensator, wenn er sich in unmittelbarer Nähe des Nagels befindet;
d) Vergleichen des Abtastwerts mit der Basislinie für eine Analyse; und
e) Bereitstellen eines auf der Analyse beruhenden Nagelbettanzeigers für den Benutzer der Vorrichtung vor Betätigung der Schneidklinge (13).

9. Verfahren zum sicheren Tiernagelschneiden nach Anspruch 8, ferner umfassend:
das Initialisieren schließt ein:
Aktivieren des Nagelbettanzeigers, und
Prüfen des Abtastwerts auf Spannung.

10. Verfahren zum sicheren Tiernagelschneiden nach Anspruch 8, ferner umfassend:
das Vergleichen schließt ein:
Analysieren, ob der Abtastwert die Basislinie überschreitet, und bei Überschreiten der Basislinie erfolgendes Aktivieren des Nagelbettanzeigers.

11. Verfahren zum sicheren Tiernagelschneiden nach Anspruch 10, ferner umfassend:
das Vergleichen schließt einen Zeitgeber ein, wobei der Zeitgeber Wiederholungen des Sammelns der Abtastwerte und des Vergleichens der Abtastwerte mit der Basislinie steuert, wobei der Zeitgeber eine bestimmte Anzahl von Wiederholungen hat, wobei der Zeitgeber die Wiederholungen mit jedem Ablesen von dem Sensor verringert, wobei der Zeitgeber endet, wenn die Wiederholungen auf null gehen, und wobei der Zeitgeber ein Ergebnis an den Computer zum Aktivieren des Nagelbettanzeigers übergibt.

12. Verfahren zum sicheren Tiernagelschneiden nach Anspruch 10, ferner umfassend:
das Bereitstellen eines Nagelbettanzeigers schließt eine zustimmende Ausgabe ein, wenn die Analyse unterhalb der Basislinie ist, eine warnende Ausgabe, wenn die Analyse gleich der Basislinie ist und wenn die Analyse leicht über der Basislinie liegt, und eine blockierende Ausgabe, wenn die Analyse die Basislinie überschreitet.

13. Verfahren zum sicheren Tiernagelschneiden nach Anspruch 12, ferner umfassend:
die zustimmende Ausgabe eine grüne LED ist, die warnende Ausgabe eine gelbe LED ist und die blockierende Ausgabe eine rote LED ist.

14. Verfahren zum sicheren Tiernagelschneiden nach Anspruch 10, worin:
das Bereitstellen eines Nagelbettanzeigers ein hörbares Signal einschließt.

15. Verfahren zum sicheren Tiernagelschneiden nach Anspruch 10, worin:
das Bereitstellen eines Nagelbettanzeigers ein Vibrationssignal einschließt.

## Revendications

1. Dispositif pour couper en sécurité une griffe (1) d'un animal à une longueur souhaitée, tout en réduisant la possibilité de blesser ledit animal en entaillant le vif (2) de ladite griffe (1), comprenant :
au moins une lame de coupe (13) ;
un moyen formant monture pour tenir ladite lame de coupe (13),
un moyen d'actionnement mécanique pour déplacer de manière réciproque ladite lame de coupe (13) d'une première position vers une seconde position ; et
un processeur (24b),
**caractérisé en ce que** ledit moyen formant monture est muni d'une plaque conductrice (7), et **en ce que** :
ladite plaque conductrice (7) est une première plaque d'un condensateur et l'animal ou un utilisateur fournit une mise à la terre qui agit comme une seconde plaque de celui-ci ; la griffe (1) de l'animal pouvant être accueillie entre ladite première plaque et ladite mise à la terre lorsqu'elle est positionnée pour être coupée par ladite lame de coupe (13) et la capacité dudit condensateur change sur la base de caractéristiques électriques de la griffe (1) de l'animal ; et
ledit processeur (24b) est programmé pour faire une distinction entre des changements de capacité dus à l'air, à la griffe (1), et à la griffe (1) avec le vif (2) sous-jacent se trouvant entre ladite première plaque et ladite mise à la terre et pour fournir un indicateur de présence de vif sur cette base avant l'actionnement de ladite lame de coupe (13).

2. Coupe-griffe de sécurité pour animal selon la revendication 1, comprenant en outre :
une lame fixe présentant une ouverture destinée à accueillir la griffe de l'animal, ladite lame fixe étant placée sur ladite lame de coupe ;
ledit moyen formant monture présentant une poignée creuse, ladite poignée accueillant ladite lame de coupe, ladite lame fixe et ledit moyen d'actionnement ;
ledit moyen d'actionnement étant relié à ladite lame de coupe, et présentant une poignée mobile se raccordant de manière pivotante à ladite poignée creuse, ce qui permet à l'utilisateur de fermer ladite poignée mobile sur ladite poignée creuse, ce qui fait avancer ladite lame de coupe sur ladite lame fixe pour couper une griffe d'un animal placée dans ladite ouverture.

3. Coupe-griffe de sécurité pour animal selon la revendication 1, comprenant en outre :
une alimentation électrique, au sein du dispositif, couplée électriquement à ladite plaque conductrice.

4. Coupe-griffe de sécurité pour animal selon la revendication 1, dans lequel ledit indicateur de présence de vif comprend un affichage visuel pour avertir l'utilisateur de la présence du vif de ladite griffe.

5. Coupe-griffe de sécurité pour animal selon la revendication 1, dans lequel :
ledit processeur initialise, détermine une capacité de base, obtient un échantillon en provenance de ladite plaque conductrice, compare ledit échantillon à ladite capacité de base, et active ledit indicateur de présence de vif en fonction de certains résultats de la comparaison.

6. Coupe-griffe de sécurité pour animal selon la revendication 1, qui comprend en outre trois diodes électroluminescentes, lesdites diodes étant en communication électrique avec le microprocesseur grâce audit circuit, le programme du microprocesseur, grâce à une détection par le condensateur, indiquant, par l'intermédiaire de l'illumination d'une première DEL, que du vif est présent à proximité du capteur et que la lame de coupe est positionnée de telle sorte qu'elle pourrait entailler le vif de la griffe de l'animal, par l'intermédiaire de l'illumination d'une deuxième DEL que seule de la matière de griffe est présente à proximité du capteur et qu'une coupe de la griffe est sans danger, et par l'intermédiaire de l'illumination d'une troisième DEL, que la lame de coupe est située entre le vif et la griffe et que la lame de coupe s'approche de l'emplacement où une coupe peut être réalisée.

7. Coupe-griffe de sécurité pour animal selon la revendication 6, dans lequel lesdites trois diodes électroluminescentes sont de différentes couleurs.

8. Procédé pour couper en sécurité une griffe (1) d'un animal à une longueur souhaitée, tout en réduisant la possibilité de blesser ledit animal en entaillant un vif (2) de ladite griffe (1), ledit procédé comprenant la fourniture d'un dispositif comprenant :
au moins une lame de coupe (13) montée au sein d'au moins une poignée pour un déplacement réciproque actionnée de manière mécanique de ladite lame (13) depuis une première position vers une seconde position, et
un processeur (24b),
**caractérisé en ce que** ledit dispositif est muni d'une plaque conductrice (7) positionnée à proximité de ladite lame de coupe (13),
dans lequel ladite plaque conductrice (7) est une première plaque d'un condensateur et l'animal ou un utilisateur fournit une mise à la terre qui agit comme une seconde plaque de celui-ci ; la griffe (1) de l'animal pouvant être accueillie entre ladite première plaque et ladite mise à la terre lorsqu'elle est positionnée pour être coupée par ladite lame de coupe (13) et la capacité dudit condensateur change sur la base de caractéristiques électriques de la griffe (1) de l'animal,
et dans lequel ledit processeur (24b) est programmé pour faire une différence entre des changements de capacité dus à l'air, à la griffe (1), et à la griffe (1) avec le vif (2) sous-jacent se trouvant entre ladite première plaque et ladite mise à la terre ;
et **caractérisé en outre par** les étapes consistant à :
a) initialiser ledit processeur (24b) et ladite plaque conductrice en leur appliquant un courant électrique ;
b) établir une base de capacité pour ledit condensateur ;
c) collecter un échantillon à partir dudit condensateur lorsqu'il est situé à proximité de ladite griffe ;
d) comparer ledit échantillon avec ladite base en vue d'une analyse ; et
e) fournir un indicateur de présence de vif à l'utilisateur dudit dispositif, sur la base de ladite analyse, avant actionnement de ladite lame de coupe (13).

9. Procédé de coupe en sécurité de griffe d'animal selon la revendication 8, dans lequel, en outre :
ladite étape d'initialisation inclut les étapes consistant à :
activer ledit indicateur de présence de vif, et
vérifier la présence de tension dans l'échantillon.

10. Procédé de coupe en sécurité de griffe d'animal selon la revendication 8, dans lequel, en outre :
ladite étape de comparaison inclut l'étape consistant à :
analyser si ledit échantillon dépasse ladite base et, s'il y a dépassement de ladite base, activer ledit indicateur de présence de vif.

11. Procédé de coupe en sécurité de griffe d'animal selon la revendication 10, dans lequel, en outre :
ladite étape de comparaison comprend une horloge, ladite horloge contrôle des répétitions de ladite collecte desdits échantillons et ladite comparaison desdits échantillons par rapport à ladite base, ladite horloge présente un certain nombre de répétitions, ladite horloge réduisant lesdites répétitions à chaque lecture dudit capteur, ladite horloge s'interrompt lorsque lesdites répétitions parviennent à zéro, et ladite horloge fournit un résultat audit ordinateur pour activer ledit indicateur de présence de vif.

12. Procédé de coupe en sécurité de griffe d'animal selon la revendication 10, dans lequel :
ladite fourniture d'un indicateur de présence de vif inclut un résultat positif lorsque ladite analyse est inférieure à ladite base, un résultat d'avertissement lorsque ladite analyse est égale à ladite base et lorsque ladite analyse est légèrement supérieure à ladite base, et un résultat d'arrêt lorsque ladite analyse dépasse ladite base.

13. Procédé de coupe en sécurité de griffe d'animal selon la revendication 12, dans lequel :
ledit résultat positif correspond à une DEL verte, ledit résultat d'avertissement correspond à une DEL jaune, et ledit résultat d'arrêt correspond à une DEL rouge.

14. Procédé de coupe en sécurité de griffe d'animal selon la revendication 10, dans lequel :
ladite fourniture d'un indicateur de présence de vif inclut un signal audible.

15. Procédé de coupe en sécurité de griffe d'animal selon la revendication 10, dans lequel :
ladite fourniture d'un indicateur de présence de vif inclut un signal vibratoire.
